# EUROPÄISCHE PATENTANMELDUNG

(11) **EP 4 227 557 A1**
(43) Veröffentlichungstag der Anmeldung: **16.08.2023**
(21) Anmeldenummer: 23155866.9
(22) Anmeldetag: 09.02.2023
(51) Int. Cl.: F16H 57/04, F16H 49/00

(54) **SPANNUNGSWELLENGETRIEBE**

(30) Priorität: 11.02.2022 LU 501458
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe mit einem Circularspline, einem Flexspline, einem Wellengenerator, der ein mittels eines Lagers relativ zu dem Flexspline rotierbar gelagertes Formungsmittel aufweist, welches das Lager und/oder den Flexspline zu einer von der Kreisform verschiedenen Form formt, und mit einem Reservoir, das Schmierfett beinhaltet und das wenigstens teilweise durch den Wellengenerator begrenzt ist. Das Spannungswellengetriebe zeichnet sich dadurch aus, dass an dem Formungsmittel wenigstens ein Vorsprung angeordnet ist, der in das Reservoir ragt.

## Beschreibung

Die Erfindung betrifft ein Spannungswellengetriebe mit einem Circularspline, einem Flexspline, einem Wellengenerator, der ein mittels eines Lagers relativ zu dem Flexspline rotierbar gelagertes Formungsmittel aufweist, welches das Lager und/oder den Flexspline zu einer von der Kreisform verschiedenen Form formt, und mit einem Reservoir, das Schmierfett beinhaltet und das wenigstens teilweise durch den Wellengenerator begrenzt ist.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird. Der Circularspline und der Flexspline weisen eine unterschiedliche Zahl von Zähnen auf. Der Flexspline kann in Form eines Flextopfes ausgebildet sein. Der Wellengenerator verformt den Flexspline zu einer ovalen, insbesondere elliptischen, Form und bringt so die Außenverzahnung des Flexsplines mit der Innenverzahnung des Circularsplines an jedem Ende der Ellipsen-Hauptachse miteinander in Eingriff. Ein Spannungswellengetriebe mit einem Flexspline in Form eines Flextopfes ist beispielsweise aus US 6 050 155 A bekannt.

Aus EP 3 336 383 A2 ist ein Spannungswellengetriebe mit einem Circularspline bekannt, dessen Innenverzahnung mit der Außenverzahnung eines Flextopfes in Zahneingriff steht, der eine Flextopfwandung und einen Flextopfboden aufweist. Das Spannungswellengetriebe zeichnet sich dadurch aus, dass der Circularspline einen axial über die Innenverzahnung hinausragenden Teil aufweist, der zusammen mit einem Teilabschnitt der Außenseite der Flextopfwandung ein Schmierstoffreservoir begrenzt, wobei das Verhältnis der axialen Länge des axial über die Innenverzahnung hinausragenden Teils des Circularsplines zu der axialen Länge der Flextopfwandung vom Flextopfboden bis zur Außenverzahnung im Bereich von 1/10 bis 8/10 liegt.

Zur Schmierung von Spannungswellengetriebe wird oft Schmierfett verwendet. Hierbei ist es beispielsweise möglich und üblich, den von dem Wellengenerator und einem topfförmigen Flexspline begrenzten Raum als Reservoir für das Schmierfett zu verwenden.

Aus DE 11 2011 105 253 T5 und aus DE 11 2013 004 710 T5 sind Spannungswellengetriebe vom Zylinderhuttyp bekannt, bei denen der Flexspline eine Hutform aufweist.

Es gibt auch Spannungswellengetriebe in Ringbauweise, bei denen der Flexspline ringförmig ausgebildet ist. Zumeist weisen diese Spannungswellengetriebe ein weiteres starres, ringförmiges, innenverzahntes Zahnrad auf, das als Dynamicspline bezeichnet wird. Der Dynamicspline steht ebenfalls mit dem Flexspline in Zahneingriff. Der Dynamicspline und der Circularspline weisen eine unterschiedliche Zahl von Zähnen auf.

Aus der europäische Patentanmeldung EP 3 246 596 A1 ist ein Spannungswellengetriebe bekannt, das als Schmiermittel kein Schmierfett, sondern einen Festschmierstoff in Form eines Schmierpulvers beinhaltet. Da die Schmierung der relevanten Bauteile mittels des Schmierpulvers bei bestimmen Ausrichtungen des Spannungswellengetriebes nicht aufrechterhalten werden könnte, sind bei diesem Spannungswellengetriebe Pulverführungen vorhanden, die an dem Formungsmittel des Wellgenerators angeordnet sind und gemeinsam mit diesem rotieren.

Es ist die Aufgabe der vorliegenden Erfindung, die Lebensdauer des Spannungswellengetriebes zu erhöhen.

Die Aufgabe wird durch ein Spannungswellengetriebe gelöst, das dadurch gekennzeichnet ist, dass an dem Formungsmittel wenigstens ein Vorsprung angeordnet ist, der in das Reservoir ragt.

In erfindungsgemäßer Weise wurde erkannt, dass eine lange Lebensdauer eines Spannungswellengetriebes erreicht werden kann, wenn eine ununterbrochene und stets ausreichende Zufuhr von Schmierfett aus dem Reservoir zu den in unmittelbarem Kontakt stehenden und relativ zueinander beweglichen Teilen des Spannungswellengetriebes gewährleistet ist.

In erfindungsgemäßer Weise wurde außerdem zunächst erkannt, dass Teile des im Reservoir bevorrateten Schmierfetts über die Lebensdauer des Getriebes austrocknen, was bislang unerkannt oder unbeachtet geblieben ist. Weiter wurde in erfindungsgemäßer Weise erkannt, dass es in mehrfacher Hinsicht nachteilig ist, wenn Teile des im Reservoir bevorrateten Schmierfetts austrocknen. Zum einen stehen sehr stark ausgetrocknete Anteile für eine Schmierung des Spannungswellengetriebes nicht mehr zur Verfügung; zum anderen behindern diese stark eingetrockneten Anteile den Fluss des noch nicht eingetrockneten Anteils an Schmierfett aus dem Reservoir zu den miteinander unmittelbar in Kontakt stehenden und relativ zueinander beweglichen Teilen des Spannungswellengetriebes, insbesondere zu dem Lager, mittels dem das Formungsmittel rotierbar gelagert ist, und zu den Verzahnungen von Circularspline und Flexspline. Insbesondere kann es vorkommen, dass die ausgetrockneten Anteile wie eine Sperre und/oder eine Dichtung wirken, die ein Nachfließen von Schmierfett aus dem Reservoir zu den Schmierstellen des Spannungswellengetriebes verhindern. Aber auch die Anteile des Schmierfetts, die nur geringfügig ausgetrocknet sind, sind zwar prinzipiell noch fließfähig, weisen aber schlechtere Schmiereigenschaften auf, weil sie weniger Grundöl beinhalten.

In erfindungsgemäßer Weise wurde weiter erkannt, dass der Effekt des Austrocknens im Wesentlichen durch einen permanenten Kontakt einer Schicht des Schmierfetts mit dem Formungsmittel verursacht wird, das sich relativ zu dem im Reservoir angeordneten Schmierfett mit hoher Rotationsgeschwindigkeit bewegt. Aufgrund dieses ständigen Kontaktes und der hierbei entstehenden Reibungswärme kommt es zu der erwähnten Austrocknung, weil der erwärmte Anteil des Schmierfetts nach und nach sein Grundöl verliert.

Der an dem Formungsmittel angeordnete wenigstens eine Vorsprung, der in das Reservoir ragt, verhindert einen unmittelbaren Kontakt des in dem Reservoir befindlichen Schmierfetts mit dem Formungsmittel und somit eine Reibung zwischen dem Formungsmittel und dem Schmierfett und damit das Entstehen von Reibungswärme und damit letztlich ein Austrocknen des Schmierfetts.

Soweit im Rahmen dieser Anmeldung von Schmierfett die Rede ist, sind insbesondere pastöse Schmierstoffe, die ein Schmieröl (Grundöl) und einen Eindicker, wie beispielsweise Seife, Bentonite, Polyharnstoffe, PTFE, und ggf. Additive beinhalten, gemeint. Soweit im Rahmen dieser Anmeldung von Schmierfett die Rede ist, ist insbesondere kein Schmierpulver und ganz insbesondere kein anorganisches Schmierpulver und/oder Schmierpulver mit einer lamellaren Kristallstruktur gemeint. Allerdings ist es nicht ausgeschlossen, dass das Schmierfett zusätzlich, insbesondere zusätzlich zu den oben genannten Bestandteilen, auch Partikel beinhaltet, insbesondere auch solche Partikel, die zur Herstellung von Schmierpulver hätten verwendet werden können.

Vorzugsweise ist das Spannungswellengetriebe derart ausgebildet, dass ein Kontakt des Schmierfetts mit dem Formungsmittel und vorzugsweise auch mit dem mit dem Formungsmittel in unmittelbarem Kontakt stehenden Lagerinnenring des Lagers ausgeschlossen ist. Das Verhindern eines unmittelbaren Kontakts des in dem Reservoir angeordneten Schmierfettes mit dem Lagerinnenring ist vorteilhaft, weil dieser mit derselben Rotationsfrequenz rotiert, wie das Formungsmittel und der oben beschriebene Effekt des Austrocknens daher auch an dem Lagerinnenring auftreten kann.

Vorzugsweise ist der Vorsprung derart ausgebildet, dass er außer seiner Funktion das Schmierfett von dem Formungsmittel zurück zu halten, keine weitere Funktion hat. Eine solche Ausführung ist im Hinblick auf eine einfache und kostengünstige Herstellung besonders vorteilhaft. Insbesondere kann vorteilhaft vorgesehen sein, dass der Vorsprung nicht dazu dient, eine Welle des Spannungswellengetriebes und/oder Teile des Wellengenerators rotierbar zu lagern. Allerdings ist es auch nicht grundsätzlich ausgeschlossen, dass der Vorsprung eine weitere Funktion hat.

Das Reservoir kann insbesondere derart ausgebildet und angeordnet sein, dass es wenigstens teilweise durch wenigstens einen Teil des Wellengenerators, insbesondere durch eine Außenfläche des Formungsmittels, begrenzt ist.

Das Formungsmittel kann beispielsweise als eine ovale, insbesondere elliptische, Scheibe ausgebildet sein oder eine ovale, insbesondere elliptische, Scheibe aufweisen. Alternativ kann das Formungsmittel durch einen ovalen, insbesondere elliptischen, Abschnitt einer Welle gebildet sein. Es ist alternativ auch möglich, dass das Formungsmittel Teil eines Two-Rollers oder eines Three-Rollers ist. Ein Two-Roller bzw. Three-Rollers kann beispielsweise durch einen rotierbar gelagerten zwei bzw. dreiarmigen Träger gebildet sein, an dessen freien Enden jeweils ein Lager, insbesondere ein Wälzlager, angeordnet ist.

Der wenigstens eine Vorsprung ist vorzugsweise derart ausgebildet und angeordnet, dass er im Betrieb des Spannungswellengetriebes einen Zwischenraum zwischen dem Schmierfett und dem Formungsmittel bewirkt. Konkret kann der wenigstens eine Vorsprung derart ausgebildet und an dem im Betrieb rotierenden Formungsmittel angeordnet sein, dass er das Schmierfett, sobald es sich dem Formungsmittel nähern sollte, zurückdrängt und auf diese Weise stets ein Zwischenraum zwischen dem Schmierfett und dem Formungsmittel verbleibt. Das Schmierfett kommt hierbei zwar vorübergehend mit dem sich schnell bewegenden Vorsprung in Kontakt, jedoch ist dieser Kontakt vergleichsweise kurz und betrifft nur einen geringen Teil des Schmierfettes, so dass es nicht zu dem oben geschilderten Austrocknungseffekt kommen kann.

Bei einer ganz besonders vorteilhaften Ausführung weist das Formungsmittel eine das Reservoir wenigstens teilweise begrenzende Formungsmittelwandung auf, die in einer ersten Axialebene des Spannungswellengetriebes angeordnet ist, während ein von dem Formungsmittel weg gerichtetes Ende des Vorsprungs in einer zweiten Axialebene des Spannungswellengetriebes angeordnet ist, die axial von der ersten Axialebene beabstandet ist. Bei einer solchen Ausführung funktioniert das Zurückdrängen des Schmierfettes besonders zuverlässig und effektiv.

Vorzugsweise weist der wenigstens eine Vorsprung einen von der Rotationsachse des Formungsmittels radial beabstandeten Abschnitt auf. Auf diese Weise wird erreicht, dass insbesondere dort ein Zurückdrängen des Schmierfettes erfolgt, wo die Relativgeschwindigkeit zu dem Schmierfett besonders hoch ist.

Bei einer besonders vorteilhaften Ausführung ist der Vorsprung als Rippe ausgebildet. Die Rippe kann vorteilhaft insbesondere radial ausgerichtet sein. Insbesondere kann die Rippe klingenförmig ausgebildet sein. Auf diese Weise kann eine besonders kleine Kontaktfläche zu dem Schmierfett erreicht werden. Insbesondere kann die klingenförmig ausgebildete Rippe derart ausgerichtet und angeordnet sein, dass ein Kontakt zu dem Schmierfett vorzugsweise ausschließlich entlang der Schneide der Klinge erfolgt. Der oben beschriebene Austrocknungseffekt findet bei einer solchen Ausführung nicht statt.

Bei einer ganz besonders vorteilhaften Ausführung ist die Rippe gebogen oder spiralförmig ausgebildet. Insbesondere kann die Rippe derart gebogen sein, dass die mit der Rippe in Kontakt kommendem Teile des Schmierfetts sowohl (insbesondere axial) zurückgedrängt als auch radial nach außen transportiert werden. Auf diese Weise kann beispielsweise bei einer Ausführung, bei der das Reservoir von einem topfförmigen Flexspline begrenzt ist, vorteilhaft erreicht werden, dass die Teile des Schmierfetts die mit dem Vorsprung in Kontakt kommen, an zu der Wandung des topfförmigen Flexsplines transportiert werden und nicht mehr radial zurück nach innen wandern. Ganz allgemein formuliert kann der Vorsprung vorteilhaft dazu ausgebildet und angeordnet sein, Schmierfett innerhalb des Reservoirs radial nach außen zu befördern. Hierzu kann der Vorsprung beispielsweise nach Art eines Schneckenförderers oder eines Spiralförderers ausgebildet sein. Eine Ausführung, bei der der Vorsprung eine gerade und radial verlaufende Rippe aufweist, bewirkt insbesondere auf Grund der Zentrifugalkraft, dass Schmierfett innerhalb des Reservoirs radial nach außen zu befördert wird.

Der Vorsprung kann vorteilhaft sternförmig ausgebildet sein. Insbesondere kann der sternförmig ausgebildete Vorsprung durch mehrere Rippen gebildet sein oder mehrere Rippen aufweisen, die wie oben geschildert ausgebildet sind.

Der Vorsprung kann vorteilhaft derart ausgebildet und angeordnet sein, dass er sich ausgehend von der Rotationsachse des Formungsmittels radial nach außen erstreckt. Auf diese Weise kann ein effektives Zurückdrängen und/oder ein radiales nach-Außen-Drängen des Schmierfetts bei einer gleichzeitig kleinen Kontaktfläche zu dem Schmierfett erreicht werden.

Vorzugsweise erstreckt sich der Vorsprung radial zumindest um die halbe Länge der Hochachse des Formungsmittels nach außen. Auf diese Weise wird vorteilhaft erreicht, dass das Schmierfett von dem gesamten Formungsmittel zurück gehalten wird.

Bei einer ganz besonders vorteilhaften Ausführung erstreckt sich der Vorsprung radial über das Formungsmittel hinaus. Insbesondere kann auf diese Weise ein Kontakt des Schmierfetts auch mit einem mit dem Formungsmittel in unmittelbarem Kontakt stehenden Lagerinnenring des Lagers verhindert werden. Das Verhindern eines unmittelbaren Kontakts des in dem Reservoir angeordneten Schmierfettes mit dem Lagerinnenring ist, wie bereits erwähnt, vorteilhaft, weil dieser mit derselben Rotationsfrequenz rotiert, wie das Formungsmittel und der oben beschriebene Effekt des Austrocknens daher auch an dem Lagerinnenring auftreten kann.

Vorzugsweise ist das Lager des Wellengenerators als Wälzlager, insbesondere als einreihiges oder mehrreihiges Kugellager, ausgebildet. Es ist jedoch beispielsweise auch möglich, dass das Lager des Wellengenerators als Gleitlager ausgebildet ist.

Bei einer ganz besonders vorteilhaften Ausführung weist das Wälzlager einen mit dem Formungsmittel in unmittelbarem Kontakt stehenden Lagerinnenring auf, wobei, wie bereits erwähnt, vorteilhaft vorgesehen sein kann, dass sich der Vorsprung radial über einen Abschnitt der axialen Stirnseite des Lagerinnenrings erstreckt. Diese Ausführung hat, wie bereits erwähnt, den ganz besonderen Vorteil, dass der oben geschilderte Effekt des Austrocknens des Schmierfettes auch nicht im Bereich des Lagerinnenrings auftreten kann. Die Vermeidung eines unmittelbaren Kontaktes des Schmierfettes mit dem Lagerinnenring ist von besonderem Vorteil, weil der Lagerinnenring mit derselben Rotationsfrequenz rotiert, wie das Formungsmittel, und weil der oben geschilderte Effekt Austrocknens dort ebenfalls auftreten könnte. Die Vermeidung eines Kontaktes des Schmierfettes mit dem Lageraußenring ist allerdings unproblematisch, weil dieser mit einer viel geringeren Rotationsfrequenz rotiert als der Lagerinnenring. Insbesondere kann vorteilhaft vorgesehen sein, dass sich der Vorsprung radial über einen Abschnitt der axialen Stirnseite des Lagerinnenrings hinaus erstreckt. Bei einer solchen Ausführung wird das Schmierfett besonders zuverlässig vom Lagerinnenring weg gehalten.

Der Vorsprung kann beispielsweise an dem Formungsmittel befestigt sein. Der Vorsprung kann vorteilhaft, insbesondere ausschließlich, reibschlüssig befestigt sein. Eine solche Ausführung ermöglicht eine einfache Montage. Alternativ oder zusätzlich kann der Vorsprung formschlüssig, beispielsweise durch eine Rast- oder Schraubverbindung, und/oder stoffschlüssig, beispielsweise durch eine Klebung, befestigt sein.

Alternativ kann der der Vorsprung gemeinsam einstückig mit dem Formungsmittel oder mit wenigstens einem Bauteil des Wellengenerators hergestellt sein.

Bei einer besonders vorteilhaften Ausführung weist der Wellengenerator eine Kupplung, insbesondere eine Oldhamkupplung, auf. Eine solche Ausführung hat den ganz besonderen Vorteil, dass ein Axialversatz der ersten Welle ausgeglichen werden kann. Auch bei einer solchen Ausführung kann vorteilhaft vorgesehen sein, dass der Vorsprung einen unmittelbaren Kontakt des in dem Reservoir befindlichen Schmierfetts mit dem Formungsmittel und/oder mit den Teilen der Oldhamkupplung verhindert. Beispielsweise kann der wenigstens eine Vorsprung an einem Bestandteil des Oldhamkupplung angeordnet sein.

Wie bereits erwähnt kann vorteilhaft vorgesehen sein, dass das Formungsmittel durch einen ovalen, insbesondere elliptischen, Abschnitt einer Welle, insbesondere einer Antriebswelle, ausgebildet ist. Bei einer solchen Ausführung kann der wenigstens eine Vorsprung an der Welle angeordnet sein. Insbesondere kann der wenigstens eine Vorsprung vorteilhaft an der Welle befestigt oder gemeinsam einstückig mit der Welle hergestellt sein.

Hinsichtlich der Ausbildung des Flexsplines gibt es keine grundsätzlichen Beschränkungen. Der Flexspline kann topfförmig oder hutförmig oder ringförmig ausgebildet sein. Insbesondere kann der Flexspline einen Teil einer das Reservoir begrenzenden Wandung bilden. Alternativ oder zusätzlich kann eine Hohlwelle, die mit dem Circularspline oder, insbesondere bei einer ringförmigen Ausbildung des Flexsplines, einem Dynamicspline drehstarr verbunden ist, einen Teil einer das Reservoir begrenzenden Wandung bildet.

Vorzugsweise weist das Reservoir zumindest eine Öffnung auf, durch die hindurch das Schmierfett austreten kann, um direkt oder indirekt zu den zu schmierenden Teilen des Spannungswellengetriebes zu gelangen. Insbesondere kann die Öffnung vorteilhaft derart ausgebildet und angeordnet sein, dass das Schmierfett axial aus dem Reservoir austritt. Insbesondere kann die Öffnung vorteilhaft derart angeordnet sein, dass das Schmierfett aus dem Reservoir unmittelbar zu dem Lager des Wellengenerators gelangen kann, mittels dem das Formungsmittel relativ zu dem Flexspline rotierbar gelagert ist.

Ganz allgemein kann die Öffnung vorteilhaft im Wesentlichen ringförmig ausgebildet sein, was vorteilhaft für einen zuverlässigen und kontinuierlichen Schmierfettfluss aus dem Reservoir zu den zu schmierenden Teilen des Spannungswellengetriebes ist.

Insbesondere kann die Öffnung koaxial zu dem Wellengenerator und/oder koaxial zu dem Flexspline und/oder koaxial zu dem Circularspline angeordnet sein.

Beispielsweise kann die Öffnung durch einen Teil des Spaltes zwischen dem Flexspline und dem Lagerinnenring oder durch einen Teil des Spaltes zwischen dem Lageraußenring und dem Lagerinnenring gebildet sein, wobei der Vorsprung vorzugsweise derart ausgebildet und angeordnet ist, dass das Schmierfett nicht unmittelbar aus dem Reservoir in Kontakt zu dem Lagerinnenring gelangt, sondern allenfalls indirekt durch den Kontakt mit den Wälzkörpern.

Bevorzugt ist eine Ausführung des Spannungswellengetriebes, das eine Lebensdauerschmierung aufweist. Unter einer Lebensdauerschmierung wird insbesondere verstanden, dass das Spannungswellengetriebe bei seiner Herstellung einmalig mit Schmierfett versehen wird, das bis zum geplanten Ende der Nutzungsdauer des Spannungswellengetriebes nicht ausgetauscht oder erneuert werden muss. Die Lebensdauerschmierung kann beispielsweise dadurch realisiert sein, dass bei der Herstellung des Spannungswellengetriebes eine für die vorgesehene Lebensdauer ausreichende Menge an Schmierfett in das Reservoir eingefügt wird. Alternativ kann das Reservoir eine Nachfüllöffnung aufweisen, durch die hindurch frisches Schmierfett eingebracht werden kann. Insbesondere kann ein Verschluss zum Verschließen der Nachfüllöffnung vorhanden sein und/oder oder es kann in der Nachfüllöffnung ein Nachfüllventil angeordnet sein.

Von ganz besonderem Vorteil ist ein Roboter, insbesondere ein Industrieroboter, der wenigstens ein erfindungsgemäßes Spannungswellengetriebe beinhaltet. Insbesondere kann das erfindungsgemäße Spannungswellengetriebe in einem Robotergelenk eingesetzt werden. Durch die Verwendung des erfindungsgemäßen Spannungswellengetriebes kann die Zuverlässigkeit des Roboters erhöht und die Ausfallzeit verringert werden.

Von besonderem Vorteil ist insbesondere eine Fahrzeugkomponente, beispielsweise ein aktives Fahrwerk oder eine Lenkung oder ein Nockenwellenversteller oder eine Stellvorrichtung zur Veränderung des Expansionshubes und/oder des Verdichtungsverhältnisses eines Verbrennungsmotors für ein Kraftfahrzeug, die wenigstens ein erfindungsgemäßes Spannungswellengetriebe aufweist. Durch die Verwendung einer solchen Fahrzeugkomponente kann die Zuverlässigkeit und Sicherheit des Fahrzeuges erhöht werden. Außerdem ist es vorteilhaft möglich, längere Inspektions- und/oder Reparaturintervalle vorzusehen, was die Wirtschaftlichkeit des Fahrzeuges erhöht.

Von ganz besonderem Vorteil ist ein Fahrwerk, insbesondere ein aktives Fahrwerk für ein Kraftfahrzeug, das wenigstens ein erfindungsgemäßes Spannungswellengetriebe aufweist. Durch die Verwendung des erfindungsgemäßen Spannungswellengetriebes kann die Zuverlässigkeit des Fahrwerks erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einem Fahrwerk besonders aufwendig ist, da viele andere Bauteile für die Reparatur vorübergehend demontiert werden müssen.

Von ganz besonderem Vorteil ist eine Lenkung, insbesondere PKW-Lenkung oder LKW-Lenkung, die wenigstens ein erfindungsgemäßes Spannungswellengetriebe aufweist. Die Lenkung kann insbesondere eine Servolenkung und/oder eine Überlagerungslenkung sein. Durch die Verwendung des erfindungsgemäßen Spannungswellengetriebes kann die Zuverlässigkeit der Lenkung erheblich erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einer Lenkung besonders aufwendig ist, da viele andere Bauteile für die Reparatur vorübergehend demontiert werden müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Spannungswellengetriebe nach dem Stand der Technik,
- Fig. 2: ein erstes Ausführungsbeispiel eines erfindungsgemäßen Spannungswellengetriebes in einer Querschnittsdarstellung entlang der Mittelachse,
- Fig. 3: das erste Ausführungsbeispiel eines erfindungsgemäßen Spannungswellengetriebes in einer Querschnittsdarstellung senkrecht zur Mittelachse,
- Fig. 4: ein zweites Ausführungsbeispiel eines erfindungsgemäßen Spannungswellengetriebes in einer Querschnittsdarstellung senkrecht zur Mittelachse, und
- Fig. 5: ein drittes Ausführungsbeispiel eines erfindungsgemäßen Spannungswellengetriebes.

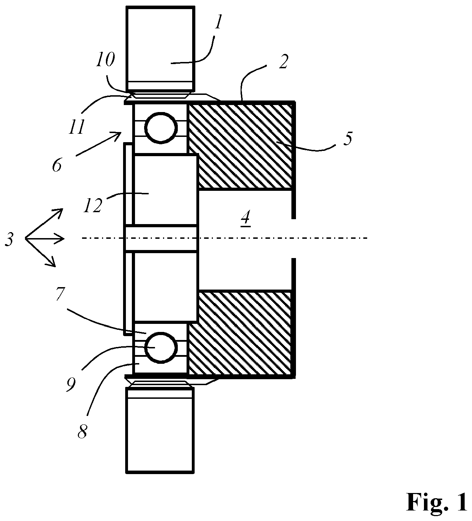

Figur 1 zeigt in einer schematischen Schnittdarstellung ein Spannungswellengetriebe nach dem Stand der Technik mit einem Circularspline 1, einem topfförmigen Flexspline 2, einem Wellengenerator 3, der ein mittels eines Lagers 6 relativ zu dem Flexspline 2 rotierbar gelagertes Formungsmittel 12 aufweist, welches das Lager 6 und den Flexspline 2 zu einer von der Kreisform verschiedenen Form formt. Das Formungsmittel 12 ist als eine ovale, insbesondere elliptische, Scheibe ausgebildet. Das Lager 6 ist als radialflexibles Wälzlager ausgebildet, das einen Lagerinnenring 7 und einen Lageraußenring 8 sowie Wälzkörper 9 aufweist.

Das Spannungswellengetriebe weist ein Reservoir 4 auf, das Schmierfett 5 (schraffiert dargestellt) beinhaltet und von dem Wellengenerator 3 und dem topfförmigen Flexspline 2 begrenzt ist. Im Betrieb des Spannungswellengetriebes wandert das Schmierfett 5 nach und nach in kleinen Mengen aus dem Reservoir 4 durch das Lager 6 und durch den Bereich zwischen dem Lageraußenring 8 und Innenseite des topfförmigen Flexsplines 2 hinaus und gelangt auch in den Bereich zwischen einer Innenverzahnung 10 des Circularsplines 1 und einer Außenverzahnung 11 des Flexsplines 2. Der Grund für diesen Transport des Schmierfetts 5 ist die im Betrieb des Spannungswellengetriebes auf das Schmierfett 5 wirkende Zentrifugalkraft und eine durch die umlaufende Ovalisierung des topfförmigen Flexsplines 2 entstehende Pumpwirkung.

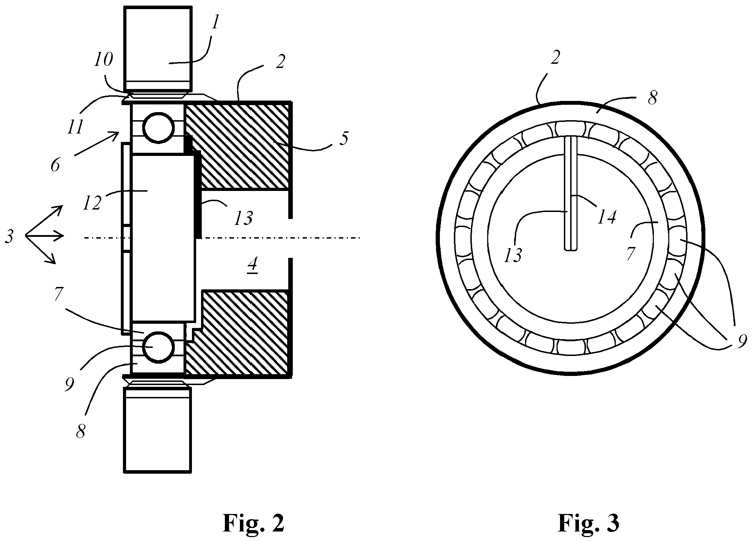

Die Figuren 2 und 3 zeigen ein erstes Ausführungsbeispiel eines erfindungsgemäßen Spannungswellengetriebes mit einem Circularspline 1, einem topfförmigen Flexspline 2, einem Wellengenerator 3, der ein Lager 6 und ein mittels des Lagers 6 relativ zu dem Flexspline 2 rotierbar gelagertes Formungsmittel 12 aufweist, welches das Lager 6 und das mit einer Außenverzahnung 11 versehene Ende des topfförmigen Flexsplines 2 zu einer von der Kreisform verschiedenen Form formt. Das Spannungswellengetriebe weist außerdem ein unmittelbar an das Lager 6 angrenzendes Reservoir 4 auf, das Schmierfett 5 (schraffiert dargestellt) beinhaltet. Die dem Boden 18 des topfförmigen Flexsplines 2 zugewandte Seite des Wellengenerators 3 und ein Teil des Flexsplines 2 begrenzen das Reservoir 4.

An dem Formungsmittel 12 ist ein Vorsprung 13 angeordnet, der in das Reservoir 4 ragt. Der Vorsprung 13 ist als radial und klingenförmig ausgebildete Rippe ausgebildet. Auf diese Weise wird eine besonders kleine Kontaktfläche zu dem Schmierfett 5 erreicht, weil ein Kontakt zu dem Schmierfett 5 ausschließlich entlang der Schneide 14 der klingenförmig ausgebildeten Rippe erfolgt.

Der Vorsprung 13 erstreckt sich radial nach außen über das Formungsmittel 12 hinaus, wodurch ein Kontakt des Schmierfetts 5 auch mit dem Lagerinnenring 7 des Lagers 6 verhindert wird. Das Verhindern eines unmittelbaren Kontakts des in dem Reservoir4 angeordneten Schmierfettes 5 mit dem Lagerinnenring 7 ist vorteilhaft, weil der Lagerinnenring mit derselben Rotationsfrequenz rotiert, wie das Formungsmittel 12 und der oben beschriebene Effekt des Austrocknens ansonsten daher auch an dem Lagerinnenring 7 auftreten könnte.

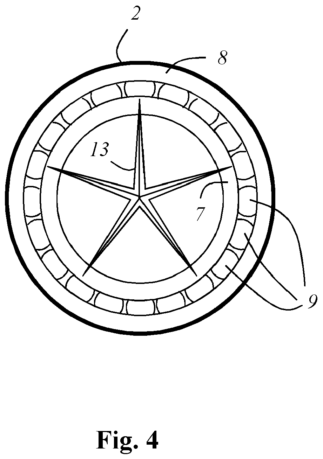

Figur 4 zeigt ein zweites Ausführungsbeispiel eines erfindungsgemäßen Spannungswellengetriebes in einer Querschnittsdarstellung senkrecht zur Mittelachse. Bei diesem Spannungswellengetriebe ist der Vorsprung 13 sternförmig aus mehreren Rippen gebildet.

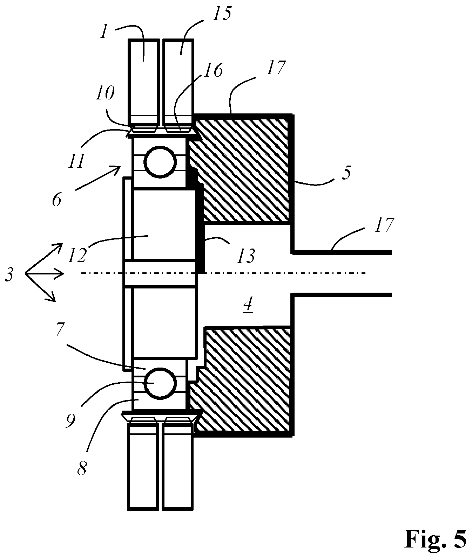

Figur 5 zeigt ein drittes Ausführungsbeispiel eines erfindungsgemäßen Spannungswellengetriebes, bei dem der Flexspline 2 ringförmig ausgebildet ist. Das Spannungswellengetriebe weist einen Circularspline 1 auf, dessen Innenverzahnung 10 mit der Außenverzahnung 11 des Flexsplines 2 an zwei gegenüberliegenden Stellen auf Grund der Verformung des Flexsplines 2 durch das Formungsmittel 12 in Zahneingriff steht. Die Anzahl der Zähne der Innenverzahnung 10 des Circularsplines 1 ist bei dieser Ausführung vorzugsweise gleich zu der Anzahl der Zähne der Innenverzahnung 10 des Flexsplines 2.

Das Spannungswellengetriebe weist außerdem einen Dynamicspline 15 auf, dessen Innenverzahnung 16 ebenfalls mit der Außenverzahnung 11 des Flexsplines 2 an zwei gegenüberliegenden Stellen auf Grund der Verformung des Flexsplines 2 und des Lagers 6 durch das Formungsmittel 12 in Zahneingriff steht. Die Anzahl der Zähne der Innenverzahnung 16 des Dynamicsplines 15 ist verschieden von der Anzahl der Zähne der Innenverzahnung 10 des Circularsplines 1.

Beispielsweise kann das Formungsmittel 12 als Antrieb fungieren, während eine an dem Dynamicspline 15 drehfest befestigte Abtriebswelle 17, die als Hohlwelle ausgebildet ist, als Abtrieb des Spannungswellengetriebes fungieren kann. Das Spannungswellengetriebe kann hierbei an dem Circularspline 1 drehfest gehalten werden, um die auftretenden Drehmomente abzustützen.

Das Spannungswellengetriebe weist außerdem ein unmittelbar an das Lager 6 angrenzendes Reservoir 4 auf, das Schmierfett 5 beinhaltet. Die als Hohlwelle ausgebildete Abtriebswelle 17 und der Wellengenerator begrenzen das Reservoir 4.

An dem Formungsmittel 12 ist ein Vorsprung 13 angeordnet, der in das Reservoir 4 ragt. Der Vorsprung 13 ist als radial und klingenförmig ausgebildete Rippe ausgebildet. Auf diese Weise wird eine besonders kleine Kontaktfläche zu dem Schmierfett 5 erreicht, weil ein Kontakt zu dem Schmierfett 5 ausschließlich entlang der Schneide 14 der klingenförmig ausgebildeten Rippe erfolgt.

Der Vorsprung 13 erstreckt sich radial nach außen über das Formungsmittel 12 hinaus, wodurch ein Kontakt des Schmierfetts 5 auch mit dem Lagerinnenring 7 des Lagers 6 verhindert wird. Das Verhindern eines unmittelbaren Kontakts des in dem Reservoir 4 angeordneten Schmierfettes 5 mit dem Lagerinnenring 7 ist vorteilhaft, weil der Lagerinnenring mit derselben Rotationsfrequenz rotiert, wie das Formungsmittel 12 und der oben beschriebene Effekt des Austrocknens ansonsten daher auch an dem Lagerinnenring 7 auftreten könnte.

### Bezugszeichenliste:

- 1: Circularspline
- 2: Flexspline
- 3: Wellengenerator
- 4: Reservoir
- 5: Schmierfett
- 6: Lager
- 7: Lagerinnenring
- 8: Lageraußenring
- 9: Wälzkörper
- 10: Innenverzahnung des Circularsplines
- 11: Außenverzahnung des Flexsplines
- 12: Formungsmittel
- 13: Vorsprung
- 14: Schneide
- 15: Dynamicspline
- 16: Innenverzahnung des Dynamicspline
- 17: Abtriebswelle

## Patentansprüche

1. Spannungswellengetriebe mit einem Circularspline (1), einem Flexspline (2), einem Wellengenerator, der ein mittels eines Lagers relativ zu dem Flexspline (2) rotierbar gelagertes Formungsmittel (12) aufweist, welches das Lager (6) und/oder den Flexspline (2) zu einer von der Kreisform verschiedenen Form formt, und mit einem Reservoir (4), das Schmierfett (5) beinhaltet und das wenigstens teilweise durch den Wellengenerator (3) begrenzt ist, **dadurch gekennzeichnet, dass** an dem Formungsmittel (12) wenigstens ein Vorsprung (13) angeordnet ist, der in das Reservoir (4) ragt.

2. Spannungswellengetriebe nach Anspruch 1, **dadurch gekennzeichnet, dass**
a. das Formungsmittel (12) als eine ovale, insbesondere elliptische, Scheibe ausgebildet ist oder eine ovale, insbesondere elliptische, Scheibe aufweist, oder dass
b. das Formungsmittel (12) durch einen ovalen, insbesondere elliptischen, Abschnitt einer Welle, insbesondere einer Antriebswelle, ausgebildet ist, insbesondere wobei der wenigstens eine Vorsprung (13) an der Welle angeordnet ist, oder dass
c. das Formungsmittel (12) Teil eines Two-Rollers oder eines Three-Rollers ist, oder dass
d. das Formungsmittel (12) eine das Reservoir (4) wenigstens teilweise begrenzende Formungsmittelwandung aufweist, die in einer ersten Axialebene des Spannungswellengetriebes angeordnet ist und dass ein von dem Formungsmittel (12) weg gerichtetes Ende des Vorsprungs (13) in einerzweiten Axialebene des Spannungswellengetriebes angeordnet ist, die axial von der ersten Axialebene beabstandet ist.

3. Spannungswellengetriebe nach Anspruch 1 oder 2, **dadurch gekennzeichnet, dass**
a. der Vorsprung (13) derart ausgebildet und angeordnet ist, dass er im Betrieb des Spannungswellengetriebes einen Zwischenraum zwischen dem Schmierfett (5) und dem Formungsmittel (12) bewirkt, und/oder dass
b. der Vorsprung (13) derart ausgebildet und angeordnet ist, dass er Schmierfett (5) von dem Formungsmittel (12) zurückdrängt.

4. Spannungswellengetriebe nach einem der Ansprüche 1 bis 3, **dadurch gekennzeichnet, dass**
a. der Vorsprung (13) als, insbesondere radial ausgerichtete, Rippe ausgebildet ist, oder dass
b. der Vorsprung (13) als klingenförmige, insbesondere radial ausgerichtete, Rippe ausgebildet ist, oder dass
c. der Vorsprung (13) als gebogene oder spiralförmige, insbesondere radial ausgerichtete, Rippe ausgebildet ist.

5. Spannungswellengetriebe nach einem der Ansprüche 1 bis 4, **dadurch gekennzeichnet, dass** der Vorsprung (13) sternförmig ausgebildet ist.

6. Spannungswellengetriebe nach einem der Ansprüche 1 bis 5, **dadurch gekennzeichnet, dass**
a. der Vorsprung (13) dazu ausgebildet und angeordnet ist, Schmierfett (5) innerhalb des Reservoirs (4) radial nach außen zu befördern, und/oder dass
b. sich der Vorsprung (13) ausgehend von der Rotationsachse des Formungsmittels (12) radial nach außen erstreckt, und/oder dass
c. Spannungswellengetriebe nach einem der Ansprüche 1 bis 14, **dadurch gekennzeichnet, dass** sich der Vorsprung (13) radial über das Formungsmittel (12) hinaus erstreckt, und/oder dass
d. der Vorsprung (13) einen von der Rotationsachse des Formungsmittels (12) radial beabstandeten Abschnitt aufweist.

7. Spannungswellengetriebe nach einem der Ansprüche 1 bis 6, **dadurch gekennzeichnet, dass**
a. das Lager (6) als Wälzlager ausgebildet ist, oder dass
b. das Lager (6) als Wälzlager ausgebildet ist, das einen mit dem Formungsmittel (12) in unmittelbarem Kontakt stehenden Lagerinnenring (7) aufweist, oder dass
c. das Lager (6) als Wälzlager ausgebildet ist, das einen mit dem Formungsmittel (12) in unmittelbarem Kontakt stehenden Lagerinnenring (7) aufweist, wobei sich der Vorsprung (13) radial über einen Abschnitt der axialen Stirnseite des Lagerinnenrings (7) erstreckt, oder dass
d. das Lager (6) als Wälzlager ausgebildet ist, das einen mit dem Formungsmittel (12) in unmittelbarem Kontakt stehenden Lagerinnenring (7) aufweist, wobei sich der Vorsprung (13) radial über einen Abschnitt der axialen Stirnseite des Lagerinnenrings (7) hinaus erstreckt.

8. Spannungswellengetriebe nach einem der Ansprüche 1 bis 7, **dadurch gekennzeichnet, dass**
a. der Vorsprung (13) an dem Formungsmittel (12) befestigt ist, oder dass
b. der Vorsprung (13), insbesondere ausschließlich, reibschlüssig an dem Formungsmittel (12) befestigt ist, oder dass
c. Spannungswellengetriebe nach Anspruch 20, **dadurch gekennzeichnet, dass** der Vorsprung (13), insbesondere ausschließlich, formschlüssig an dem Formungsmittel (12) befestigt ist, oder dass
d. der Vorsprung (13), insbesondere ausschließlich, stoffschlüssig an dem Formungsmittel (12) befestigt ist.

9. Spannungswellengetriebe nach einem der Ansprüche 1 bis 7, **dadurch gekennzeichnet, dass** der Vorsprung (13) gemeinsam einstückig mit dem Formungsmittel (12) oder mit wenigstens einem Bauteil des Wellengenerators (3) hergestellt ist.

10. Spannungswellengetriebe nach einem der Ansprüche 1 bis 9, **dadurch gekennzeichnet, dass** der Wellengenerator (3) eine Kupplung, insbesondere eine Oldhamkupplung, beinhaltet, insbesondere wobei der wenigstens eine Vorsprung (13) an einem Bestandteil des Oldhamkupplung angeordnet ist.

11. Spannungswellengetriebe nach einem der Ansprüche 1 bis 10, **dadurch gekennzeichnet, dass**
a. der Flexspline (2) einen Teil einer das Reservoir (4) begrenzenden Wandung bildet, und/oder dass
b. eine Hohlwelle, die mit dem Circularspline (1) oder, insbesondere bei einer ringförmigen Ausbildung des Flexsplines (2), einem Dynamicspline drehstarr verbunden ist, einen Teil einer das Reservoir (4) begrenzenden Wandung bildet.

12. Spannungswellengetriebe nach einem der Ansprüche 1 bis 11, **dadurch gekennzeichnet, dass**
a. das Reservoir (4) eine Nachfüllöffnung aufweist, oder dass
b. das Reservoir (4) eine Nachfüllöffnung aufweist und ein Verschluss zum Verschließen der Nachfüllöffnung vorhanden ist oder dass in der Nachfüllöffnung ein Nachfüllventil angeordnet ist.

13. Roboter, insbesondere Industrieroboter, beinhaltend wenigstens ein Spannungswellengetriebe nach einem der Ansprüche 1 bis 12 oder Robotergelenk, das wenigstens ein Spannungswellengetriebe nach einem der Ansprüche 1 bis 12 aufweist.

14. Fahrzeugkomponente, die wenigstens ein Spannungswellengetriebe nach einem der Ansprüche 1 bis 12 aufweist.

15. Fahrzeugkomponente nach Anspruch 14, **dadurch gekennzeichnet, dass**
a. die Fahrzeugkomponente als Fahrwerk, insbesondere aktives Fahrwerk für ein Kraftfahrzeug, ausgebildet ist, oder dass
b. die Fahrzeugkomponente als Lenkung, insbesondere PKW-Lenkung oder LKW-Lenkung, ausgebildet ist, oder dass
c. die Lenkung eine Servolenkung und/oder eine Überlagerungslenkung ist.
